(19) Europäisches Patentamt
European Patent Office
Office européen des brevets

(11) **EP 2 122 867 B1**

(12) **EUROPÄISCHE PATENTSCHRIFT**

(45) Veröffentlichungstag und Bekanntmachung des Hinweises auf die Patenterteilung:
**27.02.2013 Patentblatt 2013/09**

(21) Anmeldenummer: **07822379.9**

(22) Anmeldetag: **08.11.2007**

(51) Int Cl.:
*H04B 10/29* (2013.01)      *H04B 10/272* (2013.01)
*H04J 14/02* (2006.01)      *H04J 3/06* (2006.01)
*H04J 3/16* (2006.01)

(86) Internationale Anmeldenummer:
**PCT/EP2007/062077**

(87) Internationale Veröffentlichungsnummer:
**WO 2008/064984 (05.06.2008 Gazette 2008/23)**

(54) **VERFAHREN UND ANORDNUNG ZUR STEUERUNG EINES REGENERATORS FÜR DATENBURST-SIGNALE EINES SYSTEMS MIT PUNKT-ZU-MULTIPUNKT-VERBINDUNGEN, ÜBERTRAGUNGSSYSTEM MIT PUNKT-ZU-MULTIPUNKT-VERBINDUNGEN UND REGENERATOR**

METHOD AND ARRANGEMENT FOR CONTROLLING A REGENERATOR FOR DATA BURST SIGNALS OF A SYSTEM COMPRISING POINT-TO-MULTIPOINT CONNECTIONS, TRANSMISSION SYSTEM COMPRISING POINT-TO-MULTIPOINT CONNECTIONS, AND REGENERATOR

PROCÉDÉ ET DISPOSITIF DE COMMANDE D'UN RÉGÉNÉRATEUR POUR SIGNAUX DE PAQUETS DE DONNÉES D'UN SYSTÈME À LIAISONS POINT-MULTIPOINT, SYSTÈME DE TRANSMISSION À LIAISONS POINT-MULTIPOINT, ET RÉGÉNÉRATEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **27.11.2006 DE 102006055928**

(43) Veröffentlichungstag der Anmeldung:
**25.11.2009 Patentblatt 2009/48**

(73) Patentinhaber: **Nokia Siemens Networks GmbH & Co. KG**
**81541 München (DE)**

(72) Erfinder: **STADLER, Andreas**
**1040 Wien (AT)**

(74) Vertreter: **Bruglachner, Thomas E.**
**Nokia Siemens Networks GmbH & Co. KG**
**COO RTP IPR / Patent Administration**
**80240 München (DE)**

(56) Entgegenhaltungen:
**EP-A- 0 410 445          WO-A-95/32568**
**US-A- 4 710 976          US-A1- 2004 052 528**
**US-A1- 2004 247 246**

**Beschreibung**

Die Erfindung betrifft ein Verfahren zur Steuerung eines Regenerators für Datenburst-Signale eines Systems mit Punkt-zu-Multipunkt-Verbindungen nach dem Oberbegriff des Patentanspruchs 1, eine entsprechende Anordnung, ein Übertragungssystem mit Punkt-zu-Multipunkt-Verbindungen nach dem Oberbegriff des Patentanspruchs 13 und einen Regenerator für Datenburst-Signale nach dem Oberbegriff des Patentanspruchs 14.

In Systemen mit Punkt-zu-Multipunkt-Verbindungen kann die Datenübertragung in einer Richtung im Zeitmultiplex-Broadcast-Mode als kontinuierliches Datensignal und in Gegenrichtung im so genannten Burst-Mode-Betrieb als Datenburst-Signal erfolgen. Zu diesen Systemen gehören beispielsweise Zugangsnetze wie die "passiven optischen Netze", die abgekürzt als PONs (engl. für "passive optical network") bezeichnet werden.

Kennzeichnend für ein PON ist, dass eine zentrale Vermittlungs- und Management-Einheit ("optical line termination", abgekürzt OLT), im Folgenden als optische zentrale Netzeinheit bezeichnet, zu/von einer Vielzahl von optischen Teilnehmer-Netzeinheiten ("optical network unit", abgekürzt ONU) gleichzeitig Daten überträgt/empfängt. Die Verbindung erfolgt dabei über einen passiven optischen Sternkoppler (engl. "splitter") mit dem Aufteilungsverhältnis 1:N (N = Anzahl der Teilnehmer). Die Datenübertragung zwischen der OLT und den Teilnehmer-Netzeinheiten ONUi wird durch Übertragungsprotokolle gesteuert. Der Aufbau der Übertragungsprotokolle ist für PONs mit einer Bitrate im Gigabit-Bereich beispielsweise in dem ITU-T Standard G.984.3: "Gigabitcapable Passive Optical Networks (G-PON): Transmission.convergence layer specification" festgelegt.

Ein PON ist aus US 2004/0247246 bekannt.

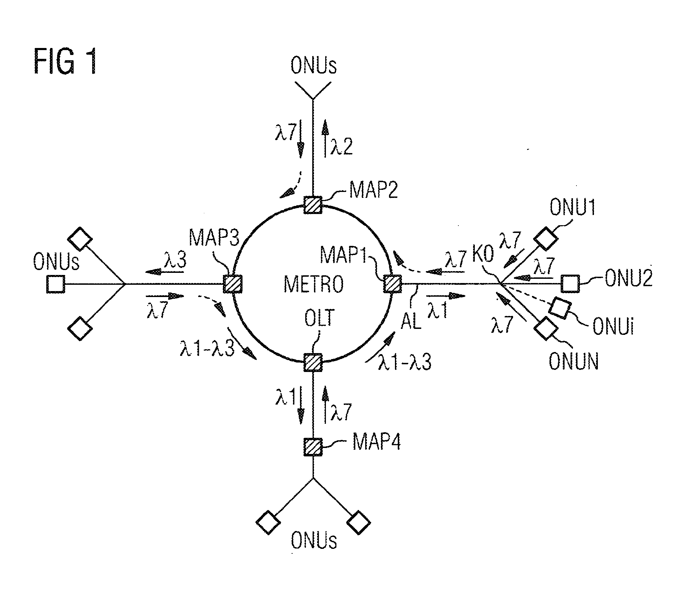

In Figur 1 ist als Beispiel das Prinzipschaltbild eines PONs dargestellt. In dem gezeigten Beispiel schließt sich an den Access-Bereich ein Metro-Bereich als Kernnetz an. In dem Metro-Bereich werden zur besseren Ausnutzung der Faserinfrastruktur Signale im Wellenlängenmultiplexbetrieb hier mit den Wellenlängen $\lambda 1$ -$\lambda 3$ übertragen. In den Schnittstellen zwischen dem beispielsweise ringförmig ausgeführten Metro-Bereich und dem Access-Bereich sind Metro-Anschlusseinrichtungen MAP1 bis MAP 4 angeordnet. Diese werden auch als Multi-Access-Point, kurz MAP, bezeichnet.

Die von der optischen zentralen Netzeinheit OLT zu den optischen Teilnehmer-Netzeinheiten ONUi in "Downstream-Richtung" gesendeten Daten werden entsprechend ihrer Wellenlänge in den Multi-Access-Points MAP1 bis MAP4 selektiert und können auch ohne Wellenlängenumsetzung über eine Access-Verbindung AL und einen Sternkoppler KO an die zugehörigen Teilnehmer-Netzeinheiten ONUi weitergeleitet werden. Außerdem ist auch eine direkte Verbindung zwischen der OLT und einer weiteren Metro-Ansschlusseinrichtung MAP4 dargestellt.

In "Upstream-Richtung" werden von den zahlreichen Teilnehmer-Netzeinheiten ONUi über die Access-Verbindung AL übertragene Datenbursts über die Metro-Anschlusseinrichtungen MAP1 bis MAP4 in das Metronetz eingespeist und anschließend zur OLT übertragen. Um trotz WDM im Metro-Netz eine einheitliche Sende-Wellenlänge aller ONUs verwenden zu können und so standortabhängige ONU-Varianten zu vermeiden, ist im MAP häufig eine Wellenlängenumsetzung des Upstream-Signals erforderlich Dadurch kann die Vielzahl von ONUs im PON (500 - 1000 pro MAP) kostengünstiger hergestellt werden und auch die Installation und Ersatzteilhaltung vereinfacht werden.

Da der Bedarf nach immer höheren Reichweiten und größeren Splittingfaktoren des oder der Sternkoppler oder anders ausgedrückt die Anzahl der Teilnehmer-Netzeinheiten ONUi pro Zentrale OLT wächst, wird eine Verstärkung innerhalb des optischen Verteilnetzes notwendig. Dazu werden im Pfad zwischen OLT und ONU in der Regel in den Metro-Anschluss-Einrichtungen so genannte 3R-Regeneratoren eingesetzt, in denen das ankommende optische Signal optisch-elektrisch gewandelt, in der Amplitude geformt, verstärkt, im Takt regeneriert und nach einer elektrisch-optischen Wandlung weiter gesendet werden. Auch der Einsatz von optischen Verstärkern im Pfad zwischen OLT und ONU ist denkbar.

Innerhalb der MAPs kann die Regeneration und Wellenlängenumsetzung einfach kombiniert werden. Da optische Verfahren zur Wellenlängenumsetzung gerade für Burstbetrieb im Upstream nicht feldtauglich zur Verfügung stehen, ist eine O/E/O-Wandlung zur Wellenlängenumsetzung erforderlich. D.h. ein Transponder wird in den Upstreampfad eingefügt. Dazu wird ein Burst-Mode-Empfänger benötigt, der mit einem hohen Dynamikbereich von beispielsweise 17 dB zurechtkommt, der durch unterschiedliche Entfernungen ONU - MAP und die Streuung der Splitterdämpfung und der ONU-Sendeleistung bedingt ist.

Auf diese Weise sind nun in PONs auch außerhalb der OLT innerhalb der Regeneratoren Burst-Mode-Empfänger angeordnet, die hohe Anforderungen an den Dynamik-Bereich erfüllen müssen. Die Empfangseinheit des Regenerators sieht somit ein Signal, dessen Bursts unterschiedliche Pegel haben und das zwischen Bursts Sendepausen aufweist, in denen keine Daten empfangen werden. Die Datenbursts des Upstream-Signals weisen in ihrem Overhead eine Präambel auf, die dem Empfänger helfen soll, mit den von Burst zu Burst unterschiedlichen Empfangspegeln und den wechselnden Bitphasen zurechtzukommen und die folgenden Nutzdaten korrekt abzutasten.

Für Burst-Mode-Empfänger in der OLT kann aufgrund der von ihr den ONUs zugeteilten Zeitschlitzen und der durch sie vorgegebenen Verzögerung des Upstream-Rahmens zum Downstream-Rahmen (Equalized Round Trip Delay gem. 10.4.3/G.984.3) der erwartete Burstbeginn errechnet und die Entscheiderschwelleneinstellung entsprechend getriggert werden.

Ein Regenerator im Upstreampfad kennt den Burstbeginn nicht im voraus. Grundsätzlich kann die Entscheiderschwelle des Burst-Mode-Empfängers auf folgende Arten eingestellt werden.

Bei AC-gekoppelten Empfängern bestimmt die Kopplungszeitkonstante die Länge der maximal übertragbaren Null- bzw. Einsfolge und die Einschwing-/Einstellzeit auf einen neuen ONU-Pegel. Die Präambel muss in diesem Fall länger sein als diese Einstellzeit. Die maximale Länge einer Null- bzw. Einsfolge wird bei GPON durch Verscramblen reduziert. Dabei ist kein eindeutiger Maximalwert angebbar. G.984 fordert die Übertragbarkeit von 72 aufeinanderfolgenden Nullen bzw. Einsen auf der Leitung. Die Präambellänge muss aber bei AC-Kopplung bei der geforderten Dynamik am Empfänger ein Vielfaches dieser Länge betragen. Durch die notwendige Präambelverlängerung wird die Effizienz der Upstream-Datenübertragung im PON eingeschränkt, so dass ein AC gekoppelter Empfänger im Einsatz eher von Nachteil ist.

Bei DC-gekoppelten Empfängern ist eine Neufestsetzung der Entscheiderschwelle innerhalb jeder Präambel notwendig. Es werden in jedem Burst mittels eines Spitzenwertdetektors (Spitzenwertgleichrichter) der "0"- und "1"-Pegel gemessen und die Entscheiderschwelle zwischen diesen Werten eingestellt. Zur Steuerung der "0"- und "1"-Pegelmessung ist ein Triggersignal notwendig, das den Spitzenwertgleichrichter vor oder am Beginn jedes Bursts zurücksetzt. Das Triggersignal für die Neufestsetzung der Entscheiderschwelle wird durch Analyse des Upstream-Signals generiert. Dazu wird die Lücke (Gap) zwischen den Bursts gesucht. Für die Lückenerkennung muss eine dark-time Detektion erfolgen und der ausgeschaltete Zustand des Sendelasers der ONU muss eindeutig von Nullen innerhalb der Bursts unterschieden werden. Das ist einfach bei 8B/10B-kodierten Signalen wie bei EPON (max. Anzahl der Nullen/Einsen auf der Leitung durch die Kodierung auf 5 limitiert) aber schwierig bei verscrambelten Signalen, da - wie oben erwähnt - kein eindeutiger Maximalwert für aufeinanderfolgende Nullen vorhanden ist. Eine Lösung ist eine Vergrößerung des Gaps zwischen den Bursts, was allerdings ebenfalls nachteilig für die Effizienz der Upstream-Datenübertragung ist. Es wird daher ein effizienteres Verfahren zur Regelung der Entscheiderschwelle und Verstärkung im Regenerator gesucht, um die hohe Dynamik in Griff zu bekommen.

Aufgabe der Erfindung ist es, für einen zwischen einer zentralen Netzeinheit und einer Vielzahl von Teilnehmer-Netzeinheiten angeordneten Regenerator eine Anordnung anzugeben, die eine zuverlässige Funktion des Regenerators für Datenburst-Signale erlaubt. Es ist ferner die Aufgabe der Erfindung, ein entsprechendes Verfahren anzugeben.

Diese Aufgaben werden erfindungsgemäß durch ein Verfahren mit den Merkmalen des Patentanspruchs 1 und eine Anordnung mit den Merkmalen des Patentanspruchs 7 gelöst.

Vorteilhafte Weiterbildungen der Erfindung sind in den Unteransprüchen angegeben.

Erfindungsgemäß wird in einem System mit Punkt-zu-Multipunkt-Verbindungen an einem Ort zwischen der zentralen Netzeinheit und den Teilnehmer-Netzeinheiten ein Anteil des Downstream-Signals ausgekoppelt, ein Header des Downstream-Signals ausgelesen und analysiert, die derart erhaltene Header-Informationen zur Steuerung eines im Upstream-Pfad für die Datenburst-Signale vorgesehenen Regenerators verwendet. Dies hat den Vorteil, dass zur Steuerung des Regenerators im Upstreampfad nun die gesamte Steuerungsinformation der Datenburst-Signale aller ONUs, die im Datenrahmen des Downstream-Signals enthalten sind, zur Verfügung steht. Auf diese Weise kann ein Steuer- oder Triggersignal für den Regenerator zuverlässig generiert werden. Durch die Vielfalt der durch das Downstream-Signal übermittelten Informationen bietet sich die Möglichkeit, die Burst-Mode Übertragung im Upstream zu optimieren und Übertragungsfehler zu verringern.

In einer Ausführungsvariante der Erfindung werden in einer für den Regenerator vorgesehenen Steuereinheit durch eine Analyse des zuvor ausgelesenen Headers des Downstream-Signals die Start- und Stoppzeiten der Datenburst-Signale ermittelt und an die zeitliche Position des Regenerators zwischen der zentralen Netzeinheit und den Teilnehmer-Netzeinheiten angepasst. Aufgrund der Kenntnis des Beginns und Endes jedes von einer ONU ausgesendeten Bursts, kann eine Einstellung der Entscheiderschwelle und/oder der Verstärkung des Burst-Mode-Empfängers wesentlich verbessert werden. Es können DCgekoppelte Empfänger für den Regenerator eingesetzt werden, da ein zuverlässiger Trigger zur Neubestimmung der Entscheiderschwelle zur Verfügung steht. Die Präambellänge kann somit gegenüber der für AC-Koppelung benötigten Länge wesentlich verkürzt werden. Da das Steuersignal unabhängig von Empfangspegel und Signalqualität ist, kann die Präambel auch kürzer sein als bei einem direkt aus dem Empfangssignal gewonnenen Triggersignal. Eine Verkürzung der Präambellänge bietet den Vorteil größerer Übertragungseffizienz.

In einer besonders vorteilhaften Ausführungsvariante wird zusätzlich zur Ermittlung des Beginns und Endes eines Datenbursts der Leistungspegel vorangegangener Datenburst-Signale von gleichen ONUs im Upstream-Pfad gemessen und in Abhängigkeit von den einzelnen Teilnehmer-Netzeinheiten gespeichert. Dadurch kann nicht nur ein Reset des Spitzenwertgleichrichters am Burst-Mode-Empfänger durchgeführt werden, sondern auch noch vorteilhaft der Burst-Mode-Empfänger auf den für den nächsten Burst zu erwartenden Dynamikbereich genauer eingestellt werden. Auf diese Weise ist eine Regelung der Entscheiderschwelle und/oder der Verstärkung möglich.

In einer weiteren Ausführungsvariante werden die Vorteile einer Forward-Error-Correction (FEC) zur Ermittlung des Steuersignals ausgenutzt. Am FEC-Decoder werden die Bitfehler der übertragenen Nullen und Einsen im Upstream-Pfad ermittelt und in Abhängigkeit von den einzelnen Teilnehmer-Netzeinheiten gespeichert. Die Entscheiderschwelle oder Verstärkung für die Bursts der einzelnen Teilnehmer-Netzeinheiten kann auf diese Weise derart eingestellt werden, dass die Bitfehlerwahrscheinlichkeit am Decoder minimal wird. Dies führt ebenfalls zu einer Steigerung der Regeneratorfunktion und somit zu einer verbesserten Datenburstübertragung.

Die Erfindung wird anhand von Ausführungsbeispielen näher erläutert.

Es zeigen

Figur 1 einen Übersichtsplan für ein passives optisches Netz
Figur 2 ein erstes Prinzipschaltbild für die Anordnung zur Steuerung eines Regenerators
Figur 3 eine Variante der Anordnung aus Fig. 2

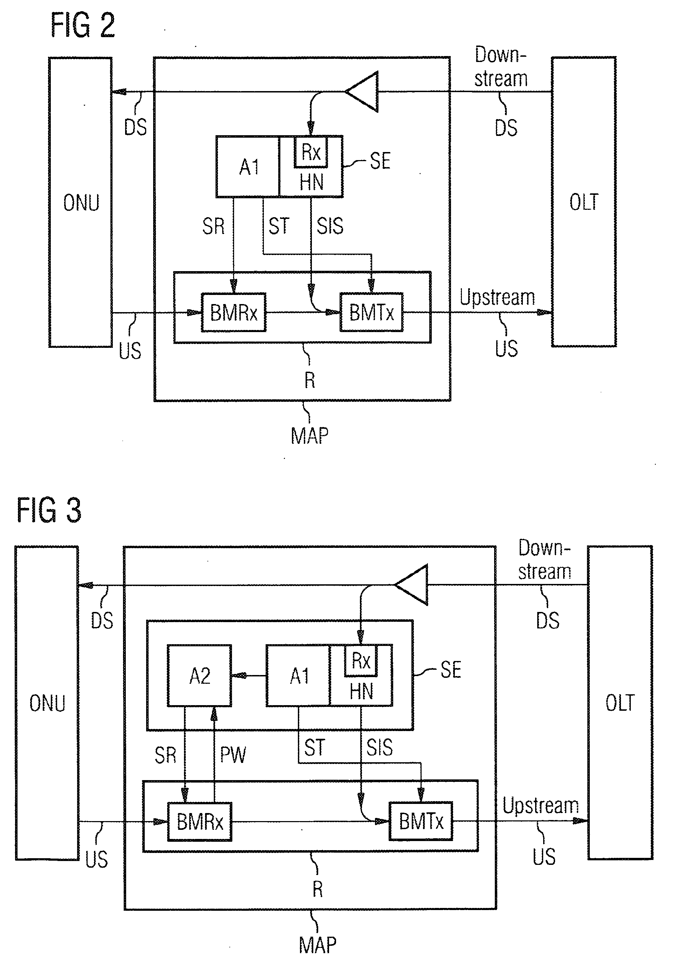

Figur 2 zeigt ein vereinfachtes Prinzipschaltbild eines PON-Systems mit der erfindungsgemäßen Anordnung zur Steuerung eines Regenerators. Der besseren Anschaulichkeit wegen ist nur eine Teilnehmer-Netzeinheit ONU dargestellt, die über einen Metroanschlusspunkt MAP mit der zentralen Netzeinheit OLT verbunden ist. Des Weiteren ist sowohl für das Downstream-Signal als auch für das Upstream-Signal respektive das Datenburst-Signal eine eigene Übertragungsfaser eingezeichnet. Im Metro-Bereich zwischen der OLT und dem MAP kann dies ebenfalls erfüllt sein. Im Access-Bereich zwischen MAP und dem Sternkoppler wird der Datenverkehr in der Regel in beiden Richtungen über nur eine Zugangsfaser geführt.

Der Regenerator für Datenburst-Signale ist in dem in der Figur dargestellten Ausführungsbeispiel im Metro-Zugangspunkt MAP angeordnet. Grundsätzlich ist eine Anordnung des Regenerators an einer beliebigen Stelle im Upstream-Pfad des PONs denkbar.

In dem in der Figur dargestellten Ausführungsbeispiel ist erfindungsgemäß eine Steuereinheit SE zwischen den Downstream-Pfad und den im Upstream-Pfad angeordneten Regenerator R zwischengeschaltet. Der Burst-Mode-Regenerator R besteht aus einem Burst-Mode-Empfänger BMRx und einem Burst-Mode-Sender BMTx. Der Burst-Mode-Empfänger BMRx ist üblicherweise aus einer eingangsseitigen Photodiode zur o/e-Wandlung, einem Burst-Mode-Verstärker, einem Entscheider und einer Takt- und Datenrückgewinnung (CDR-Einheit) aufgebaut. Der Burst-Mode-Sender BMTx umfasst üblicherweise eine Laserdiode, deren Ausgangssignal entweder direkt elektrisch oder indirekt über einen Modulator mit dem Burst-Signal moduliert wird, wodurch eine e/o-Wandlung stattfindet. Erzeugt die Laserdiode ein Ausgangssignal mit einer anderen Wellenlänge als das Eingangssignal der Photodiode, so wird die Wellenlänge der Upstream-Signale umgesetzt. Befindet sich der Regenerator R in einem Metroanschlusspunkt MAP, so kann nach der o/e-Wandlung ein in der Zeichnung nicht dargestellter Wellenlängenumsetzer in den Regenerator integriert sein. In diesem Fall wird der Regenerator auch als Transponder bezeichnet.

Im Downstreampfad wird ein Leistungsanteil des Downstream-Signals ausgekoppelt und dem Empfänger Rx einer Hilfsnetzeinheit HN zugeführt. Die Hilfsnetzeinheit HN ist Teil der erfindungsgemäßen Steuereinheit SE. Die Auskopplung des Downstreamsignals erfolgt vorteilhafterweise nach einem optischen Verstärker. Der Empfänger Rx der Hilfsnetzeinheit HN benötigt dann nur einen vernachlässigbar kleinen Teil der Downstreamleistung.

Die Hilfsnetzeinheit HN hat allein die Aufgabe, die im Header des Downstreamsignals enthaltene Bandbreitenzuweisung (engl. "bandwidth map") auszulesen und wie eine einzelne Teilnehmer-Netzeinheit ONU am Ranging teilzunehmen.

Nach dem hier beispielhaft gewählten ITU-Standard G.984.3 wird die Datenübertragung zwischen der OLT und den ONUs in einem PON anhand von Rahmen-Signalen in Up- und Downstream-richtung gesteuert. Das Feld der bandwidth map, abgekürzt BW map, (vgl. Kap. 8.1.3.6/G.984.3) befindet sich innerhalb des Steuerblocks PCDd (physical control block downstream) des Downstream-Rahmens und enthält ein Datenreihe mit Bandbreitenzuweisungen oder Sendezeitzuweisungen für die einzelnen ONUs. Zu beachten ist, dass diese Zuweisungen auf einzelne so genannte T_CONTs bezogen sind. Bei einem T-CONT handelt es sich um einen "Daten-Container", der immer einer ONU zugeordnet ist. Ein T-CONT wird durch das Feld der Alloc-ID identifiziert. Die Pointer auf den Beginn und das Ende eines Datenbursts von einer ONU sind in den Feldern *SStart* und *SStop* hinterlegt. Über das Feld der BW-Map teilt die OLT demnach jeder einzelnen ONU die Zeitpunkte mit, wann ein Burst gesendet werden darf. Somit ist in der BW-Map die zeitliche Position der Upstream-Datenburst-Signale aller ONUs relativ zum Upstream-Rahmen enthalten.

Anhand des Ranging (siehe ITU-Standard G.984.3, Kap. 10.4) wird die zeitliche Position der einzelnen ONUs festgelegt. Unterschiedliche Streckenverzögerungen werden nivelliert, indem von der OLT jeder ONU ein Equalization-Delay zugewiesen wird. Die Aufgabe des Equalization-Delay besteht in einer Verzögerung der Upstream-Übertragung von jeder ONU zur OLT, so dass ein kollisionsfreies Zusammenfügen aller ONU-Bursts zu einem gemeinsamen Upstream-Signal im Splitter ermöglicht wird und das Upstream-Signal in der richtigen Phase bei der OLT ankommt.

Erfindungsgemäß wird aus den im Downstream-Signal übermittelten Zeiten für den Burstbeginn *Tstart* und das Burstende *Tstop* ein Steuer- oder Triggersignal SR für die Neufestsetzung der Entscheiderschwelle des Regenerator-Empfängers BMRx gewonnen. Eine Analyse des Upstream-Signals zur Generierung eines Triggersignals ist somit nicht mehr notwendig. Allerdings muss zur Berechnung des Burstbeginns und Burstendes zusätzlich zur BW-Map auch noch die (zeitliche) Position des MAP oder des Regeneratorortes zwischen ONU und OLT bekannt sein, also die Verzögerung zwischen Downstream- und Upstreamrahmen. Die Berechnung des Burstbeginns am Ort des Regenarators erfolgt aufgrund der beim Ranging ermittelten und an die ONUs übertragenen Equalization-Delays.

Zunächst wird auf die Ermittlung der Zeiten für den Burstbeginn *Tstart* und das Burstende *Tstop* aus dem Downstream-Signal näher eingegangen. Zum Auslesen der im Downstream-Signal enthaltenen Information synchronisiert sich die Hilfsnetzeinheit HN auf den Downstream-Rahmen auf und extrahiert die relevanten Felder der BW-Map des Downstream-Signals. Ferner bearbeitet sie einen eingeschränkten Satz von PLOAM-Meldungen. Bei den PLOAM-Meldungen handelt es sich um PON Management Funktionalitäten für die physikalische Schicht (vgl. G.984.3). Dies bedeutet, dass die Hilfs-Netzeinheit PLOAMd-Meldungen im Downstream-Pfad einliest, und sie für Einstellungen und als Trigger für Rückmeldungen in Form von PLOAMu-Meldungen im Upstream-Rahmen verwendet, was u.a. für das Ranging (und die Detektion der HN durch die OLT) notwendig ist. Auf diese Weise erfüllt die Hilfsnetzeinheit HN Aufgaben wie eine ONU, mit dem Unterschied, dass sie keinerlei Payload sendet und empfängt. Da im Downstream-Rahmen die Bandbreitenzuweisungen für alle ONUs enthalten sind, empfängt die Hilfnetzeinheit HN die relevanten Informationen betreffend den Burststart und das Burstende von allen ONUs. Diese Informationen können anschließend zur Einstellung des Regenerators verwendet werden und zur Kommunikation mit der OLT bzgl. der zeitlichen Lage des Regenerators. Da sie keinerlei Payload sendet und empfängt, ist der Implementierungsaufwand somit gegenüber einer vollwertigen ONU stark reduziert.

Für das Ranging der Hilfsnetzeinheit HN wird ein Zugang zum Upstream-Signal benötigt, da hierbei die OLT die zeitliche Lage ihrer Sendebursts ausmessen muss und sie dazu am PLOAM-Meldungsprotokoll teilnehmen muss. Daher wird nach Auslesen des Downstream-Rahmens in der Hilfsnetzeinheit ein Systeminformationssignal SIS (das sind die als Rückmeldung verwendeten PLOAMu-Meldungen einschließlich dem Physical Layer Overhead) an den Regenerator abgegeben. Das resultierende Ausgangssignal SIS der Hilfsnetzeinheit HN und die restlichen ONU-Signale des Upstream-Rahmens können im Regenerator leicht zusammengefügt werden, da die OLT für eine kollissionsfreie Einteilung der Bursts sorgt. Als Endprodukt des Rangings erhält die Hilfsnetzeinheit HN von der OLT über das Downstream-Signal ein Equalization-Delay zugewiesen, das im Folgenden als *EqD(MAP)* bezeichnet wird. Das Ranging der Hilfsnetzeinheit HN hat vor der Inbetriebnahme der anderen ONUs zu erfolgen.

In der Analyseeinheit A1, die sich an die Hilfseinheit HN anschließt, werden die in der BW-Map des Downstream-Rahmens übermittelten Start- und Stoppzeiten der einzelnen Bursts ausgewertet.

Dabei ist erstens zu beachten, dass der Startzeitpunkt *SStart* im BW-map-Feld auf ein Byte innerhalb des Upstream-Rahmens zeigt, das außerhalb der Präambel am Ende des Feldes PLOu liegt. Dies bedeutet, dass für den Burststart *Tstart* die PLOu-Zeit der Startzeit *Tbwmapstart* noch voranzustellen ist (siehe auch ITU-Standard G.984.3, Kap.8.1.3.6.3):

$$\text{Es gilt: } Tstart = Tbwmapstart - Tplou$$

Zweitens muss zusätzlich zur BW-Map auch noch die (zeitliche) Position am Ort des Regenerators (hier der die Metroanschlussstelle MAP) zur Berechnung von Burstbeginn und -ende berücksichtigt werden. Im Folgenden wird anhand einer Beispielrechnung dargestellt, wie der Startzeitpunkt eines Bursts am Ort des Regenerators berechnet werden kann.

Zur Berechnung von Burstbeginn und -ende am Ort des Regenerators zwischen ONU und OLT muss die Verzögerung zwischen Downstream- und Upstreamrahmen berücksichtigt werden. Jede ONU verzögert ihren Upstream-Rahmen gegenüber dem Downstream-Rahmen um das von der OLT ONU-individuell zugewiesene Equalization-Delay *EqD(N)*.

Dabei gilt (die Terme entsprechen Kap. 10.4.2/G.984.3):

$$Rtd = 2 * Tpd(N) + Ts + To + Tt + EqD(N)$$

Dabei bezeichnen:

*Rtd*      Round Trip Delay, d.h. die Verzögerung zwischen Downstream- und Upstreamrahmen

*Tpd(N)*      Fiber Propagation Delay für die ONU N: Verzögerung durch die Glasfaserübertragung entsprechend deren Länge zwischen OLT und ONU

*Ts*      Verzögerung durch die Signalverarbeitung auf der ONU

*To*      Verzögerung durch die O/E- und E/O-Wandlung des Signals auf OLT und ONU. Zur Vereinfachung sei für alle ONUs einschließlich der Hilfsnetzeinheit HN am MAP eine einheitliche Zeit für *Ts* und *To* angenommen.

*Tt*      Verzögerung durch den Regenerator/Transponder

*EqD(N)* EqualizationDelay für die ONU N

Das auf der OLT gemessene Round Trip Delay *Rtd (Rtd@OLT)* wird durch die OLT vorgegeben. Dazu wird der EqualizationDelay *EqD* jeder ONU von der OLT in einer Weise geregelt, dass die Verzögerung *Rtd@OLT* zwischen Downstream- und Upstreamrahmen am Empfänger der OLT für jede ONU gleich ist.

Durch diese Regelung ist auch am Regeneratoreingang das Round Trip Delay *Rtd@MAP* zwischen Downstream- und Upstream-Rahmen für jede ONU gleich. Der Burststart *Tstart@MAP* relativ zum Beginn des Downstream-Rahmens im MAP ist gegeben durch:

$$Tstart@MAP \quad = \quad Rtd@MAP + Tstart$$

Weiters gilt

$$Rtd@MAP = \quad Rtd@OLT - Tt - 2 * Tpd(MAP)$$

(Das Round Trip Delay ist am MAP gegenüber dem an der OLT um die Signallaufzeit OLT-MAP in Down- und Upstream-Richtung sowie um die Transponderverzögerung vermindert).

Außerdem nimmt die Hilfsnetzeinheit HN am MAP am Ranging teil. Ihr wird demnach von der OLT ein Equalization-Delay zugewiesen, sodass gilt:

$$Rtd@OLT = 2*Tpd(MAP) + Ts + To + EqD(MAP)$$

und somit wird

$$Rtd@MAP = 2*Tpd(MAP) + Ts + To + EqD(MAP) - Tt - 2*Tpd(MAP)$$

$$Rtd@MAP = Ts + To + EqD(MAP) - Tt$$

$$Tstart@MAP = Ts + To + EqD(MAP) - Tt + Tstart$$

Somit ist gezeigt, dass der Burstbeginn am MAP *Tstart@MAP* einfach aus dem beim Ranging zugewiesenen *EqD(MAP)* und den Werten aus der BW-Map berechnet werden kann.

Ist Anfangszeitpunkt *Tstart@MAP* und Endzeitpunkt *Tend@MAP* der Bursts am Ort des Regenerators (hier MAP) bekannt, kann damit neben dem Burst-Mode-Empfänger auch der Burst-Mode-Sender des Regenerators gesteuert werden. Dazu wird ein zweites Steuersignal ST von der Hilfsnetzeinheit an den Burst-Mode-Sender BMTx übermittelt. Diese Steuerung ist für die Laserregelung des Burst-Mode-Senders BMTx wichtig, da die Burstpausen ein Ungleichgewicht zwischen Nullen und Einsen im Signal bewirken, die sonst eine Fehleinstellung des Laservorstroms zur Folge hätte. Alternativ zur Sendersteuerung kann auch in den Burstpausen ein Füllmuster in das Upstreamsignal eingefügt werden. Die Steuerung dieses Einsetzens erfolgt ebenfalls mittels des errechneten Endes und Starts der Bursts. Dabei ist natürlich ein Sicherheitsabstand zu den Bursts zu halten, der bei etwaigen Toleranzen eine Kollision zwischen Bursts und Füllmuster vermeidet. Das Steuersignal ST wird auch zum Einfügen der Rückmeldungen PLOAMu der Hilfsnetzeinheit HN and die OLT benutzt. Das Steuersignal SR triggert burstspezifische Einstellungen und Umschaltungen des Burstmodeempfängers BMRx.

In einer zweiten Ausführungsvariante wird neben der Ermittlung des Anfangszeitpunktes und Endzeitpunktes der Bursts am Ort des Regenerators (hier MAP) die Pegel der ankommenden Bursts der einzelnen ONUs am Burst-Mode-Empfänger gemessen und beispielsweise getrennt nach ONUs oder TCONTs in einer Tabelle gespeichert.

Diese Ausführungsvariante ist in Fig. 3 dargestellt. Hier ist neben der Analyseeinheit A1 eine weitere Analyseeinheit A2 in der Steuereinheit SE enthalten. Diese erhält neben dem Eingangssignal aus der ersten Analyseeinheit, das die angepassten Start- und Stoppzeiten und die zugehörigen ONU/TCONT-Bezeichner umfasst, als weiteres Eingangssignal die gemessenen Pegelwerte PW vom Burst-Mode-Empfänger. Aus diesen Pegelwerten wird die benötigte Entscheiderschwelle und/oder Verstärkung berechnet und in der Burstpause (Gap) am Burstmodeverstärker eingestellt.

In der zweiten Analyseeinheit können beispielsweise die Pegelwerte vorangegangener Bursts von jeweils denselben ONUs geordnet nach TCONTs in einer Tabelle gespeichert werden. Ein TCONT ist immer einer ONU zugeordnet. Eine Organisation nach TCONTs ist vorteilhaft gegenüber einer Organisation nach O-NUs, da so die Hilfsnetzeinheit HN nicht die Zuteilung der TCONTs zu ONUs den mitverfolgen (PLOAMd-Meldung Assign_AllocID) und verwalten muss. Alternativ können auch die Mittelwerte der Pegel gemittelt über mehrere Bursts einer ONU gespeichert werden.

Mittels der bekannten Pegelwerte wird die Entscheiderschwelle und/oder Verstärkung in Abhängigkeit von jeder ONU eingestellt. Erfolgt allein eine Verstärkungsregelung, so wird nur der "1"-Pegel gemessen und gespeichert. Erfolgt zusätzlich oder alternativ auch eine Schwellenregelung, so wird auch der "0"-Pegel gemessen und zur Ermittlung der optimalen Schwelle für den Entscheider herangezogen. Diese Schwelle wird dann ebenso wie die Verstärkung (oder auch anstelle) während der Burstpause am Burstmodeempfänger eingestellt.

Bei dieser Variante werden erste Bursts einer ONU vermessen und diese gemessenen Pegelwerte werden für die Einstellung der Entscheiderschwelle und/oder Verstärkung für die folgenden Bursts verwendet. Eine Mittelung über mehrere Bursts ist möglich. Da die gemessenen Pegelwerte immer erst mit dem nächstfolgenden Burst derselben ONU wirksam werden, muss die Spitzenwertmessung am Burst-Mode-Empfänger nicht schnell zu Burstbeginn durchgeführt werden, sondern kann langsamer erfolgen. Das ist in zweierlei Weise vorteilhaft: Die hohen Anforderungen an die Signalwertdetektion durch kurze Bit- und Präambellänge sinken und die Präamble muss nicht um die Meßzeit und Einstellzeit verlängert werden, wie ohne Zwischenspeicherung der Einstellwerte über einen Burst hinaus notwendig wäre. Weiters ist die Dauer der Bursts bekannt und die Messung kann sich auf Bursts genügender Länge beschränken. Insgesamt können die Pegelwerte genauer gemessen werden.

In einer dritten Ausführungsvariante wird eine Steuerung der Entscheiderschwelle oder der Verstärkung bei Verwendung einer Forward Error Correction erreicht, indem eine Auswertung der Bitfehler getrennt nach Nullen und Einsen erfolgt. Dabei wird bei einem Überhang von Bitfehlern in gesendeten Einsen gegenüber Nullen für eine ONU/TCONT eine niedrigere Schwelle oder eine höhere Verstärkung eingestellt bzw. umgekehrt wenn die Bitfehlerrate der gesendeten Nullen zu hoch ist. Im Bereich sehr hoher Bitfehler, in dem die FEC keine brauchbare Fehlerstatisik mehr liefern kann und die Mehrzahl der Fehler nicht mehr korrigierbarist, kann auch die Balance zwischen empfangenen Nullen und Einsen zur Regelung herangezogen werden. Diese sollte ja durch das Scramblen ohne Übertragungsfehler immer ausgeglichen sein. Zur Durchführung der Regelung wird beispielsweise eine Fehlerstatistik getrennt nach ONUs oder TCONTs aufgestellt. Das erfolgt am FEC-Decoder, der aus Aufwandsgründen in der Regel an der OLT und nicht am MAP vorhanden sein wird. Diese Bitfehlerwerte oder die bereits errechneten Steuerinformationen müssen somit von der OLT mittels Meldungen an die Hilfsnetzeinheit HN an den MAP übertragen werden, wo in Abhängigkeit von den übermittelten Werten die Entscheiderschwelle oder Verstärkung eingestellt wird. Für die Meldung der Bitfehlerwerte oder Steuerinformationen können beispielsweise im Standard G.984.3 definierte Felder wie PLOAMd und OMCI innerhalb des Downstream-Rahmensignals verwendet werden. Alternativ könnte auch zusätzlich zur OLT ein FEC-Decoder am MAP angeordnet sein, was allerdings kostenaufwendig ist.

Zusammenfassend sei angemerkt, dass beliebige Kombinationen der beschriebenen Ausführungsvarianten möglich sind.

Das erfindungsgemäß erzeugte Triggersignal kann auch zur Verbesserung der Eigenschaften einer Takt- und Datenrückgewinnung im Regenerator verwendet werden, indem der Trigger die in der Phasen-Auswerteeinrichtung gespeicherten Phaseninformationen rücksetzt. Dies ermöglicht dem Burst-Mode-Empfänger ein schnelleres, präziseres Adaptieren auf eine neue Phasenlage. Es wird möglich, die Integrationszeit der Takt- und Datenrückgewinnung über die Gap-Länge hinaus auszudehnen, ohne dass es zu einer Interaktion mit dem vorangegangenen Burst kommt. Die Verlängerung der Integrationszeit führt zu einer größeren Störunempfindlichkeit. Auch bei einer Takt- und Datenrückgewinnung mittels (analoger) PLL lässt sich derselbe Vorteil durch ein Rücksetzen des Schleifenfilters erzielen.

Die Hilfsnetzeinheit HN ermöglicht zusätzlich die systeminterne Übertragung von Fehler- und Steuerinformationen des Regenerators bzw. MAPs.

**Patentansprüche**

1. Verfahren zur Steuerung eines Regenerators für Datenburst-Signale eines Systems mit Punkt-zu-Multipunkt-Verbindungen, in dem von einer zentralen Netzeinheit (OLT) ein Downstream Signal in Downstream-Richtung zu einer Vielzahl von Teilnehmer-Netzeinheiten (ONU1, ONU2, ..., ONUN) übertragen wird und von den Teilnehmer-Netzeinheiten Datenburst-Signale in Upstream-Richtung zu der zentralen Netzeinheit (OLT) übertragen wird,
   **dadurch gekennzeichnet,**
   **dass** an einem Ort zwischen der zentralen Netzeinheit (OLT) und den Teilnehmer-Netzeinheiten (ONU1, ONU2, ..., ONUN) ein Anteil des Downstream-Signals ausgekoppelt wird,
   **dass** ein Header des Downstream-Signals analysiert wird, und dass die derart erhaltenen Header-Informationen zur Steuerung eines im Upstream-Pfad für die Datenburst-Signale vorgesehenen Regenerators verwendet werden.

2. Verfahren nach Anspruch 1,
**dadurch gekennzeichnet,**
**dass** aus dem Header des Downstream-Signals Burstbeginn und Burstende der Datenburst-Signale ausgelesen werden,
**dass** diese an die Position des Regenerators zwischen der zentralen Netzeinheit (OLT) und den Teilnehmer-Netzeinheiten angepasst werden und der Regenerator hierdurch zeitlich gesteuert wird.

3. Verfahren nach Anspruch 1 oder 2,
**dadurch gekennzeichnet,**
**dass** anhand der angepassten Daten des Burstbeginns und Burstendes der Datenburst-Signale die Entscheiderschwelle und/oder Verstärkung des Regenerators eingestellt wird.

4. Verfahren nach Anspruch 1 bis 3,
**dadurch gekennzeichnet,**
**dass** die Analyse des Headers durch Auslesen der Bandbreitenzuweisung im Downstream-Rahmen des Downstream-Signals erfolgt.

5. Verfahren nach Anspruch 1 bis 4,
**dadurch gekennzeichnet,**
**dass** der Pegel vorangegangener Datenburst-Signale von gleichen Teilnehmer-Netzeinheiten (ONU1, ONU2, ..., ONUN) im Upstream-Pfad gemessen und für jeden Datenburst zur individuellen Einstellung der Entscheiderschwelle und/oder Verstärkung des Regenerators verwendet wird.

6. Verfahren nach Anspruch 1 bis 5,
**dadurch gekennzeichnet,**
**dass** bei Verwendung von Forward-Error-Correction Bitfehler der übertragenen Nullen und Einsen im Upstream-Pfad ermittelt und in Abhängigkeit von den einzelnen Teilnehmer-Netzeinheiten zur Einstellung der Entscheiderschwelle und/oder Verstärkung des Regenerators verwendet wird.

7. Anordnung zur Steuerung eines Regenerators für Datenburst-Signale eines Systems mit Punkt-zu-Multipunkt-Verbindungen,
**dadurch gekennzeichnet,**
**dass** der Regenerator zwischen einer Vielzahl von Teilnehmer-Netzeinheiten (ONU1, ONU2, ..., ONUN) und einer bidirektional mit den Teilnehmer-Netzeinheiten verbundenen zentralen Netzeinheit (OLT) im Upstream-Pfad angeordnet ist, und
**dass** an den Regenerator (R) eine Steuereinheit (SE) angeschlossen ist, die in Abhängigkeit von einem im Downstream-Pfad ausgekoppelten Downstream-Signal den Regenerator steuert.

8. Anordnung nach Anspruch 7,
**dadurch gekennzeichnet**,
die die Steuereinheit (SE) eine Hilfsnetzeinheit (HN) und mindestens eine Analyseeinheit (A1) aufweist, wobei der Hilfsnetzeinheit (HN) über eine Empfangseinheit (Rx) ein Anteil eines Downstream-Signals zugeführt wird, und nach Auslesen von Header-Information des Downstream-Signals ein Systeminformationssignal (SIS) an den Regenerator abgegeben wird, und die Analyse-Einheit (A1) in Abhängigkeit von der ausgelesenen Header-Information des Downstream-Signals Steuersignale ermittelt und ein erstes Steuersignal (SR) an eine Empfangseinheit (BMRx) und ein zweites Steuersignal (ST) an eine Sendeeinheit (BMTx) des Regenerators (R) abgibt.

9. Anordnung nach Anspruch 8,
**dadurch gekennzeichnet,**
**dass** die Analyse-Einheit (A1) derart ausgestaltet ist, dass aus dem Header des Downstream-Signals Burstbeginn und Burstende der Datenburst-Signale ausgelesen werden,
**dass** diese an die Position des Regenerators zwischen einer zentralen Netzeinheit (OLT) und einer Vielzahl von Teilnehmer-Netzeinheiten angepasst werden und anhand dieser Daten der Regenerator gesteuert wird.

10. Anordnung nach Anspruch 7 bis 9,
**dadurch gekennzeichnet,**

**dass** die Steuereinheit (SE) eine weitere Analyseeinheit (A2) umfasst, die in Abhängigkeit von an der Empfangseinheit (BMRx) gemessenen Pegelwerten der Datenburst-Signale und in Abhängigkeit von der Header-Information des Downstream-Signals das Steuersignal (SR) für die Empfangseinheit (BMRx) ermittelt und an diese abgibt.

**11.** Anordnung nach Anspruch 7 bis 10,
**dadurch gekennzeichnet,**
**dass** die Steuereinheit (SE) derart ausgestaltet ist, dass das Steuersignal (SR) für die Empfangseinheit (BMRx) in Abhängigkeit von Bitfehlern der übertragenen Nullen und Einsen im Upstream-Pfad ermittelt wird.

**12.** Anordnung nach einem der vorhergehenden Ansprüche,
**dadurch gekennzeichnet,**
**dass** das System mit Punkt-zu-Multipunkt-Verbindungen als passives optisches Netz ausgestaltet ist.

**13.** Übertragungssystem mit Punkt-zu-Multipunkt-Verbindungen, aufweisend eine zentrale Netzeinheit (OLT), die über einen Splitter bidirektional mit einer Vielzahl von Teilnehmer-Netzeinheiten (ONU1, ONU2, ..., ONUN) verbunden ist,
**dadurch gekennzeichnet,**
**dass** zwischen der zentralen Netzeinheit (OLT) und den Teilnehmer-Netzeinheiten (ONU1, ONU2, ..., ONUN) im Upstream-Pfad ein Regenerator angeordnet ist, der nach einem Verfahren gemäß der Ansprüche 1 bis 6 gesteuert wird.

**14.** Regenerator für Datenburst-Signale,
der eine in Signalrichtung eingangsseitig angeordnete Empfangseinheit (BMRx) und eine ausgangsseitig angeordnete Sendeeinheit (BMTx) aufweist,
**dadurch gekennzeichnet,**
**dass** die Empfangseinheit (BMRx) und Sendeeinheit (BMTx) mit einer Steuereinheit (SE) verbunden sind, die derart ausgestaltet ist, dass in Abhängigkeit von einem entgegen der Signalrichtung übertragenen Downstream-Signal Steuersignale erzeugt werden, die eine zuverlässige Einstellung des Regenerators für Datenburst-Signale im upstream-Pfad ermöglichen.

**Claims**

**1.** Method for controlling a regenerator for data burst signals in a system having point-to-multipoint connections, in which a central network unit (OLT) transmits a downstream signal in the downstream direction to a multiplicity of subscriber network units (ONU1, ONU2, ..., ONUN) and the subscriber network units transmit data burst signals in the upstream direction to the central network unit (OLT), **characterized**
**in that** a component of the downstream signal is decoupled at a location between the central network unit (OLT) and the subscriber network units (ONU1, ONU2, ..., ONUN),
**in that** a header of the downstream signal is analyzed, and
**in that** the header information obtained in this manner is used for controlling a regenerator provided in the upstream path for the data burst signals.

**2.** Method according to Claim 1,
**characterized**
**in that** the burst start and the burst end of the data burst signals are read from the header of the downstream signal,
**in that** these are matched to the position of the regenerator between the central network unit (OLT) and the subscriber network units, and the regenerator's timing is controlled as a result.

**3.** Method according to Claim 1 or 2,
**characterized**
**in that** the matched data of the burst start and the burst end of the data burst signals are used to adjust the decision-maker threshold and/or the gain of the regenerator.

**4.** Method according to Claims 1 to 3,
**characterized**
**in that** the header is analyzed by reading the bandwidth allocation in the downstream frame of the downstream signal.

**5.** Method according to Claims 1 to 4,

**characterized**

**in that** the level of preceding data burst signals from like subscriber network units (ONU1, ONU2, ..., ONUN) in the upstream path is measured and is used for each data burst for the purpose of individually adjusting the decision-maker threshold and/or the gain of the regenerator.

6. Method according to Claims 1 to 5,
**characterized**
**in that**, when forward error correction is used, bit errors in the transmitted zeros and ones in the upstream path are ascertained and are used to adjust the decision-maker threshold and/or the gain of the regenerator on the basis of the individual subscriber network units.

7. Arrangement for controlling a regenerator for data burst signals in a system having point-to-multipoint connections,
**characterized**
**in that** the regenerator is arranged in the upstream path between a multiplicity of subscriber network units (ONU1, ONU2, ..., ONUN) and a central network unit (OLT), connected bidirectionally to the subscriber network units, and
**in that** the regenerator (R) has a control unit (SE) connected to it which controls the regenerator on the basis of a downstream signal decoupled in the downstream path.

8. Arrangement according to Claim 7,
**characterized**
**in that** the control unit (SE) has an auxiliary network unit (HN) and at least one analysis unit (A1), wherein the auxiliary network unit (HN) is supplied with a component of a downstream signal via a reception unit (Rx), and reading of header information in the downstream signal is followed by the output of a system information signal (SIS) to the regenerator, and the analysis unit (A1) takes the read header information from the downstream signal as a basis for ascertaining control signals and outputs a first control signal (SR) to a reception unit (BMRx) and a second control signal (ST) to a transmission unit (BMTx) of the regenerator (R).

9. Arrangement according to Claim 8,
**characterized**
**in that** the analysis unit (A1) is in a form such that the burst start and the burst end of the data burst signals are read from the header of the downstream signal,
**in that** these are matched to the position of the regenerator between a central network unit (OLT) and a multiplicity of subscriber network units, and these data are used to control the regenerator.

10. Arrangement according to Claims 7 to 9,
**characterized**
**in that** the control unit (SE) comprises a further analysis unit (A2) which takes level values, measured on the reception unit (BMRx), for the data burst signals and takes the header information in the downstream signal as a basis for ascertaining the control signal (SR) for the reception unit (BMRx) and outputs it thereto.

11. Arrangement according to Claims 7 to 10,
**characterized**
**in that** the control unit (SE) is in a form such that the control signal (SR) for the reception unit (BMRx) is ascertained on the basis of bit errors in the transmitted zeros and ones in the upstream path.

12. Arrangement according to one of the preceding claims, **characterized in that** the system having point-to-multipoint connections is in the form of a passive optical network.

13. Transmission system having point-to-multipoint connections, having a central network unit (OLT) which is connected bidirectionally to a multiplicity of subscriber network units (ONU1, ONU2, ..., ONUN) via a splitter,
**characterized**
**in that** the central network unit (OLT) and the subscriber network units (ONU1, ONU2, ..., ONUN) have a regenerator arranged between them in the upstream path, said regenerator being controlled on the basis of a method according to Claims 1 to 6.

14. Regenerator for data burst signals
which has a reception unit (BMRx) arranged on the input side in the signal direction and a transmission unit (BMTx) arranged on the output side,

**characterized**

**in that** the reception unit (BMRx) and the transmission unit (BMTx) are connected to a control unit (SE) which is in a form such that control signals are produced on the basis of a downstream signal transmitted contrary to the signal direction, which control signals allow reliable adjustment of the regenerator for data burst signals in the upstream path.

**Revendications**

1. Procédé de commande d'un régénérateur pour signaux de rafales de données d'un système avec des liaisons de point à multipoint, dans lequel un signal de flux descendant est transmis dans le sens descendant d'une unité de réseau centrale (OLT) vers une pluralité d'unités de réseau d'abonnés (ONU1, ONU2, ..., ONUN) et des signaux de rafales de données sont transmis dans le sens montant des unités de réseau d'abonnés vers l'unité de réseau centrale (OLT), **caractérisé en ce que** :

   - une partie du signal de flux descendant est découplée à un endroit entre l'unité de réseau centrale (OLT) et les unités de réseau d'abonnés (ONU1, ONU2, ..., ONUN) ;
   - un en-tête du signal de flux descendant est analysé ; et
   - les informations d'en-tête ainsi obtenues sont utilisées pour commander un régénérateur prévu dans le chemin de flux montant pour les signaux de rafales de données.

2. Procédé selon la revendication 1, **caractérisé en ce que** le début de rafales et la fin de rafales des signaux de rafales de données sont extraits de l'en-tête du signal de flux descendant et **en ce que** ceux-ci sont adaptés à la position du régénérateur entre l'unité de réseau centrale (OLT) et les unités de réseau d'abonnés et **en ce que** le régénérateur est ainsi commandé dans le temps.

3. Procédé selon la revendication 1 ou 2, **caractérisé en ce que** le seuil de décision et/ou l'amplification du régénérateur sont réglés à l'aide des données adaptées du début de rafales et de la fin de rafales des signaux de rafales de données.

4. Procédé selon la revendication 1 à 3, **caractérisé en ce que** l'analyse de l'en-tête se fait par extraction de l'affectation de largeur de bande dans le cadre du flux descendant du signal de flux descendant.

5. Procédé selon la revendication 1 à 4, **caractérisé en ce que** le niveau de signaux de rafales de données précédents est mesuré par de mêmes unités de réseau d'abonnés (ONU1, ONU2, ..., ONUN) dans le chemin de flux montant et est utilisé, pour chaque rafale de données, pour le réglage individuel du seuil de décision et/ou de l'amplification du régénérateur.

6. Procédé selon la revendication 1 à 5, **caractérisé en ce que**, dans le cas de l'utilisation d'une correction d'erreur avant, des erreurs de bits des zéros et des uns transmis sont déterminées dans le chemin de flux montant et sont utilisées, en fonction des différentes unités de réseau d'abonnés, pour le réglage du seuil de décision et/ou de l'amplification du régénérateur.

7. Dispositif pour commander un régénérateur pour des signaux de rafales de données d'un système avec des liaisons de point à multipoint, **caractérisé en ce que** le régénérateur est situé dans le chemin de flux montant entre une pluralité d'unités de réseau d'abonnés (ONU1, ONU2, ..., ONUN) et une unité de réseau centrale (OLT) reliée de manière bidirectionnelle aux unités de réseau d'abonnés et **en ce qu'**est connectée au régénérateur (R) une unité de commande (SE) qui commande le régénérateur en fonction d'un signal de flux descendant découplé dans le chemin de flux descendant.

8. Dispositif selon la revendication 7, **caractérisé en ce que** l'unité de commande (SE) comporte une unité de réseau auxiliaire (HN) et au moins une unité d'analyse (A1), une partie du signal de flux descendant étant envoyée sur l'unité de réseau auxiliaire (HN) via une unité réceptrice (Rx) et, après l'extraction d'information d'en-tête du signal de flux descendant, un signal d'information système (SIS) étant délivré au régénérateur, et l'unité d'analyse (A1) déterminant des signaux de commande en fonction de l'information d'en-tête du signal de flux descendant extraite et délivrant un premier signal de commande (SR) à une unité réceptrice (BMRx) et un deuxième signal de commande (ST) à une unité émettrice (BMTx) du régénérateur (R).

9. Dispositif selon la revendication 8, **caractérisé en ce que** l'unité d'analyse (A1) est réalisée de manière telle que le début de rafales et la fin de rafales des signaux de rafales de données sont extraits de l'en-tête du signal de flux descendant et **en ce que** ceux-ci sont adaptés à la position du régénérateur entre une unité de réseau centrale (OLT) et une pluralité d'unités de réseau d'abonnés et **en ce que** le régénérateur est commandé à l'aide de ces données.

10. Dispositif selon la revendication 7 à 9, **caractérisé en ce que** l'unité de commande (SE) comprend une unité d'analyse supplémentaire (A2) qui, en fonction de valeurs de niveaux des signaux de rafales de données mesurées au niveau de l'unité réceptrice (BMRx) et en fonction de l'information d'en-tête du signal de flux descendant, détermine le signal de commande (SR) pour l'unité réceptrice (BMRx) et le délivre à celle-ci.

11. Dispositif selon la revendication 7 à 10, **caractérisé en ce que** l'unité de commande (SE) est réalisée de manière telle que le signal de commande (SR) pour l'unité réceptrice (BMRx) est déterminé en fonction d'erreurs de bits des zéros et des uns transmis dans le chemin de flux montant.

12. Dispositif selon l'une des revendications précédentes, **caractérisé en ce que** le système avec des liaisons de point à multipoint est réalisé en tant que réseau optique passif.

13. Système de transmission avec des liaisons de point à multipoint, comportant une unité de réseau centrale (OLT) qui est reliée de manière bidirectionnelle, via un séparateur, à une pluralité d'unités de réseau d'abonnés (ONU1, ONU2, ..., ONUN), **caractérisé en ce qu'**est situé, entre l'unité de réseau centrale (OLT) et les unités de réseau d'abonnés (ONU1, ONU2, ..., ONUN), dans le chemin de flux montant, un régénérateur qui est commandé selon un procédé selon les revendications 1 à 6.

14. Régénérateur de signaux de rafales de données, lequel comporte une unité réceptrice (BMRx) située côté entrée dans la direction des signaux et une unité émettrice (BMTx) située côté sortie, **caractérisé en ce que** l'unité réceptrice (BMRx) et l'unité émettrice (BMTx) sont reliées à une unité de commande (SE) qui est réalisée de manière telle que sont générés, en fonction d'un signal de flux descendant transmis dans le sens inverse de la direction des signaux, des signaux de commande qui permettent un réglage fiable du régénérateur pour des signaux de rafales de données dans le chemin de flux montant.

# FIG 1

## FIG 2

## FIG 3

**EP 2 122 867 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040247246 A